# EUROPÄISCHE PATENTSCHRIFT

(11) **EP 0 816 305 B1**
(45) Veröffentlichungstag und Bekanntmachung des Hinweises auf die Patenterteilung: **25.04.2007**
(21) Anmeldenummer: 97109813.2
(22) Anmeldetag: 17.06.1997
(51) Int. Cl.: C04B 41/87, A61K 6/06, B22C 1/00

(54) **Bindemittelfreie Beschichtung für Oberflächen von feuerfesten Keramiken**
Binder-free coating for refractory ceramics
Revêtement sans liant pour des surfaces en céramique réfractaire

(30) Priorität: 03.07.1996 DE 19626656
(43) Veröffentlichungstag der Anmeldung: 07.01.1998
(73) Patentinhaber: SHERA-WERKSTOFFTECHNOLOGIE GMBH, D-49448 Lemförde (DE)
(72) Erfinder: Nowack, Norbert, Prof. Dr.-Ing., 47877 Willich-Anrath (DE); Grill, Günter, 49448 Lemförde (DE); Haider, Otmar, 49459 Lembruch (DE)
(74) Vertreter: Stenger, Watzke & Ring

(56) Entgegenhaltungen:
- EP-A- 0 372 180
- GB-A- 2 294 040
- DATABASE WPI Section Ch, Week 8148, Derwent Publications Ltd., London, GB; Class A81, AN 81-88814D, XP002043429 & SU 808 482 A (AS USSR PHYS CHEM) 28 Februar 1981
- DATABASE WPI Section Ch, Week 9141 Derwent Publications Ltd., London, GB; Class M22, AN 91-299484 XP002043430 & JP 03 198 946 A (KAWASAKI STEEL CORP) , 30.August 1991

## Beschreibung

Die vorliegende Erfindung betrifft ein Verfahren zur Herstellung einer Beschichtung für Oberflächen von feuerfesten Keramiken und die Verwendung einer derart beschichteten Gußform zur Herstellung von Gußteilen aus Ti, Zr und deren Legierungen.

Das Hauptanwendungsgebiet der erfindungsgemäßen bindemittelfreien Beschichtung für Oberflächen von Keramiken, insbesondere Oxidkeramiken, betrifft Gußformen und Tiegelmaterialien für Schmelzen aus Titan und Zirkonium sowie deren Legierungen. Da Titan und Zirkonium ähnliche chemische und auch physikalischchemische Eigenschaften aufweisen, gilt das für das jeweilige Einzelmetall Gesagte auch für das andere Metall und deren Legierungen in entsprechender Weise. Gegenüber dem Zirkonium und dessen Legierungen sind jedoch das Titan und dessen Legierungen technisch wesentlich wichtiger, so daß hier der Schwerpunkt liegt.

In der Medizintechnik und dabei insbesondere in der Dentaltechnik werden Prothetikteile, wenn diese individuell für jeden Patienten hergestellt werden müssen, aus Legierungen gefertigt, indem entsprechende Gußformen geschaffen werden, in die die flüssigen Legierungen gegossen werden. Nach dem Erstarren der Legierung wird die Gußform entfernt und man erhält das Legierungsgußteil. Zum Herstellen dieser Gußformen werden Gußeinbettmassen verwendet, die auf einem Keramiksystem basieren.

Neben den Gußeinbettmassen gibt es noch Gußfeineinbettmassen, die sich von den Gußeinbettmassen dadurch unterscheiden, daß bei der Herstellung der Gußform ein zusätzlicher Verfahrensschritt erforderlich ist. Bei Anwendung der Guß feineinbettmasse wird ein Wachsmodell des späteren Hohlraums der Gußform für den Legierungsguß mit der Gußfeineinbettmasse überzogen. Dabei wird eine Suspension der Gußfeineinbettmasse beispielsweise mit einem Pinsel auf ein Wachsmodell aufgetragen und so mit einer Primärschicht ummantelt. Das Wachsmodell mit der eingetrockneten Primärschicht aus der Gußfeineinbettmasse wird anschließend mit einer gewöhnlichen Gußeinbettmasse umgossen, die dann die Sekundärschicht bildet, um so die endgültige Gußform herzustellen. Durch Erwärmen fließt das Wachs aus der Gußform heraus und hinterläßt einen Hohlraum, der später von der Gußlegierung ausgefüllt wird.

Feingußteile aus Titan oder dessen Legierungen konnten insbesondere eine breite Anwendung in Bereichen der Medizintechnik für Implantatteile, Zahnersatz etc. finden, denn Titan und dessen Legierungen zeichnen sich durch eine außerordentlich hohe Korrosionsbeständigkeit im menschlichen Körper und durch ein hohes Maß an Biokompatibilität aus. Diese äußert positiven Eigenschaften sind verbunden mit einer niedrigen Dichte, die etwa halb so groß ist wie bei den gewöhnlichen Legierungen auf Fe-, Ni- oder Co-Basis, die derzeit in medizinisch-technischen Bereichen eingesetzt werden. Schließlich zeichnen sich Titan und dessen Legierungen durch hohe Festigkeitswerte aus.

Bislang wurden Titanteile, beispielsweise künstliche Gelenke, Knochenteile etc., nur durch Schmieden, Schneiden, Fräsen oder Schleifen hergestellt. Die Herstellung von kleinen, dünnwandigen und filigranen Titanteilen, wie sie im medizinischen Bereich und dabei insbesondere in der Dentaltechnik sowie auch im Bereich der Herstellung von Schmuck und Uhrenteilen gefordert werden, ist bislang noch nicht gelungen. Die Gründe hierfür lassen sich auf die schwierige Feingießtechnik für Titan bzw. dessen Legierungen zurückführen. Insbesondere laufen beim Vergießen von Titan oder dessen Legierungen zahlreiche chemische Reaktionen zwischen der keramischen Gußform und dem flüssigen Metall ab, die zu Versprödungen des Titans bzw. dessen Legierungen sowie zu einem Verlust der hohen Korrosionsbeständigkeit und der positiven mechanischen Eigenschaften führen, so daß die Feingußteile unbrauchbar sind. Die Oberfläche des Titangußteils müßte wegen der Versprödung durch Beizen oder Schleifen nachgearbeitet bzw. abgearbeitet werden. Im Bereich der Medizintechnik würden jedoch die Feingußteile dadurch inakzeptabel in ihren Geometrien verändert. Bei dünnen Teilen, wie sie beispielsweise im Bereich der Dentaltechnik vorkommen und wo die Wandstärke nur einige Millimeter beträgt, könnte die abzuarbeitende Schicht die Stärke des Gußteils besitzen, was alle dentaltechnischen Arbeiten ausschließen würde. Eine funktionierende Gießtechnik von dünnen, meist kleinen und filigranen Teilen ist somit die Voraussetzung für eine Anwendung im medizinischen Bereich, zumal die Gußteile individuell angefertigt werden müssen, da sie dem jeweiligen Patienten im Körper angepaßt werden müssen. Dies setzt weiterhin eine hohe Gußpräzision voraus.

Die beschriebenen Probleme bei Titan-Feingußteilen liegen, wie bereits erwähnt, in der Entstehung einer versprödeten Oberfläche, die in der Technik "alpha-case" genannt wird. Damit ist die Bildung einer Randzone auf dem Titangußstück gemeint, in der dieses durch eine Sauerstoffaufnahme infolge einer chemischen Verschlackungsreaktion stark versprödet ist, wobei die Schichtdicke je nach Gußteilgeometrie, Gießbedingungen und Verfahrenstechnik Stärken von 0,1 bis 2 mm besitzt. Diese alpha-case-Schicht entsteht durch chemische Reaktionen zwischen dem flüssigen Titan bzw. der flüssigen Titanlegierung und der keramischen Formmasse beim Gießen des Gußteils. Hiervon sind insbesondere feine, kleine und filigrane Teile betroffen. Mit den bisher bekannten keramischen Formmassen, beispielsweise Korund, Magnesit, Calciumoxid, Zirkonoxiden, Quarzen etc., läßt sich die Bildung der alpha-case-Schichten nicht verhindern.

Bei Gießtemperaturen von 1650° bis 1800 °C nehmen das Titan bzw. dessen Legierungen infolge der hohen Sauerstoffaffinität des Titans Sauerstoff sowie die entsprechende Metallkomponente, die das Oxid in der Keramikmasse bildet, auf. Dieser Vorgang findet auch dann statt, wenn unter einer Inertgasatmosphäre gegossen wird. Der Sauerstoff verursacht dabei die hohe Versprödung, da schon geringe Gehalte von interstitiell eingelagerten Sauerstoffatomen im Metallgitter des Titans eine starke Abnahme der Duktilität zur Folge haben. Die entsprechende aufgelöste Metallkomponente erzeugt demgegenüber nicht die starke Versprödung. Selbst die thermochemisch stabilsten Oxide, wie sie in der bisherigen Gießereitechnik verwendet werden, wie Aluminiumoxid (Korund), Zirkonium(IV)oxid, Magnesiumoxid (Magnesit) etc., werden von dem flüssigen Titan bzw. dessen Legierungen vehement angegriffen und geben dabei Sauerstoff an das flüssige Metall ab. Gleichzeitig werden die entsprechenden Metalle (Al, Zr, Mg, Ca etc.) freigesetzt. Diese werden vom Titan aufgelöst oder, wie es beispielsweise bei Mg und Ca der Fall ist, verdampfen teilweise. Thermodynamisch sind somit diese Keramikmassen gegenüber Titan bzw. dessen Legierungen instabil. Diese Instabilität liegt in den Gleichgewichtskonstanten (chemisches Gleichgewicht) der chemischen Reaktionen begründet. Diese Gleichgewichtskonstanten lassen sich berechnen, da bei den beim Gießvorgang herrschenden hohen Temperaturen chemische Reaktionen thermodynamisch kontrolliert ablaufen. So liegt das chemische Gleichgewicht für die Komponenten Al₂O₃, ZrO₂, SiO₂, CaO, MgO sowie P₂O₅ stark auf der Seite der ablaufenden Reaktionen der Oxidation von Titan und Reduktion der entsprechenden keramischen Stoffe.

Die Probleme hinsichtlich des Titans oder dessen Legierungen treten dabei nicht nur dann auf, wenn das Keramiksystem für eine Gußeinbettmasse bzw. für eine Gußfeineinbettmasse verwendet wird, sondern bereits auch dann, wenn das Titan oder dessen Legierungen in Tiegeln verschmolzen wird. Titan oder dessen Legierungen greifen nämlich alle bislang gebräuchlichen Tiegelmaterialien beim Aufschmelzen durch chemische Reaktionen derart an, daß die Tiegel zerstört werden. Sämtliche in der Technik bekannten Keramikmaterialien sind gegen Titan bzw. Titan-Legierungs-Schmelzen nicht beständig. Die Keramikmaterialien lösen sich dabei in der Schmelze auf, der Sauerstoffgehalt der Schmelze wird stark erhöht und - sofern es sich um Oxidkeramiken handelt - wird die Legierungszusammensetzung stark verändert, so daß auch aus diesem Grunde das Schmelzen von Titan oder dessen Legierungen erfolglos ist. Auch Tiegelmaterialien auf Kohlenstoffbasis werden von der flüssigen Schmelze angegriffen, indem diese sehr stark Kohlenstoff bis zur Sättigung aufnehmen. Das Titan oder dessen Legierungen versprödet dabei und ist für technische Zwecke nicht mehr verwendbar (TiC-Bildung). Auch Nitrid-Keramiken (Si₃N₄, BN, etc.) sind nicht beständig. Stickstoff ist dem Sauerstoff sehr ähnlich.

Im europäischen Patent EP 0 372 180 wird ein Keramiksystem für Schmelzen aus Titan, Zirkonium oder deren Legierungen unter Verwendung wenigsten einer Lanthan-Verbindung offenbart, welches rein aus Lanthan(III)-oxidfluorid (LaOF) oder aus binären oder ternären Mischungen aus Lanthan(III)-oxidfluorid (LaOF); Lanthan(III)-oxid (La₂O₃) sowie Lanthan(III)-fluorid (LaF₃) und einem beim Erhitzen rückstandslos verbrennenden Bindemittel aufgebaut ist und daß das Keramiksystem zusätzlich noch Praseodymfluorid und/oder -oxid und/oder Neodymfluorid und/oder -oxid und/oder Cerfluorid und/oder -oxid und/oder Yttriumfluorid und/oder -oxid enthält. Das beschriebene Keramiksystem ist zwar gegenüber flüssigen Schmelzen aus Titan, Zirkonium und deren Legierungen nahezu inert, so daß beim Herstellen von Gußteilen keine alpha-case-Schichten und die damit verbundenen Versprödungserscheinungen auftreten. Das beschriebene Keramiksystem fordert jedoch eine aufwendige Herstellung über mehrere Arbeitsschritte, so etwa durch Aufbau einer Primärbeschichtung auf dem Wachmodell.

Aus der SU 808 482 B ist es bekannt, daß die Widerstandsfähigkeit von Oxidkeramiken gegenüber Reaktionen von geschmolzenen alkalischen Metallen und deren Salzen ansteigt, wenn diese mit einer aus zwei Schichten bestehendes Beschichtung, einer unteren Schicht aus La₂O₃ und Li₂O und einer äußeren Schicht aus La₂O₃Cr₂O₃, versehen werden. Dabei wird gemäß der SU 808 482 B eine Keramik zum Erhalten einer solchen Beschichtung mit einer wäßrigen Lösung aus La- und Li-Nitraten behandelt, getrocknet und anschließend mit einem Schlick aus mit wäßrigem 10%-igen Polyvenyl-Alkohol hergestellten Lanthanchromit (La₂O₃Cr₂O₃) beschichtet und bei Temperaturen zwischen 1750° C und 1800° C für 40 bis 60 min gebrannt (gesintert).

Die Beschichtung gemäß der SU 808 482 B ist somit nicht für ein Verfahren des Titan und/oder Zirkonium-Feingusses geeignet.

Aus der JP 03 198 946 A ist die Herstellung von "Dickschichten" aus Yttrium (III)- oder Lanthan (III)-Nitrat oder Yttrium (III)- oder Lanthan (III)-chlorid-Lösungen mit darin suspendiertem Yttrium (III)- oder Lanthan (III)-oxid in hohen Konzentrationen, d. h. in Hochviskosensuspensionen, bekannt. Derartige Suspensionen werden zur Herstellung von Gußformen auf Wachsteile aufgetragen.

Aus der GB 2 294 040 A sind Beschichtungen für Gußformen bekannt. Hierbei handelt es sich um Beschichtungen, in denen verschiedene Y₂O₃-Pulver mit verschiedenen Bindemitteln, anorganische und organische Säuren mit inerten organischen Lösungsmitteln als Bindemittel zu Beschichtungen verarbeitet werden. Den Y₂O₃-Pulvern, beispielsweise geschmolzene oder gesinterte Oxide, werden weitere Oxide beigemischt, die jedoch gegenüber Ti oder Zr-Schmelzen instabil sind.

Der vorliegenden Erfindung liegt demgemäß die **Aufgabe** zugrunde, eine gegenüber Schmelzen aus Titan, Zirkonium oder deren Legierungen thermochemisch stabile und beständige Beschichtung für Oberflächen von Keramiken, insbesondere Oxidkeramiken, zu schaffen, die in wenigen Arbeitsschritten hergestellt werden kann und auf den Oberflächen dichte, nahezu porenlose Beschichtungen in geringer Dicke liefert. Die Beschichtung soll sowohl als Beschichtung von aus Gußeinbettmassen hergestellten Gußformen als auch für Gußfeineinbettmassen und Tiegelkeramiken geeignet sein.

Die Aufgabe wird erfindungsgemäß **gelöst** durch ein
Verfahren zur Herstellung einer Beschichtung für Oberflächen von feuerfesten Keramiken, wobei
a) eine wäßrige Lösung eines thermisch instabilen Metallsalzes, ausgewählt aus den Salzen von Sc, La oder Y oder deren Gemische, auf eine feuerfeste Keramik, ausgewählt aus der Gruppe der Oxidkeramiken, Nitridkeramiken und Siliciumcarbidkeramiken aufgebracht wird,
b) das Lösungswasser entfernt wird,
c) das in Schritt b) erhaltene Produkt auf eine Temperatur oberhalb der Zersetzungstemperatur des Metallsalzes erhitzt wird und
d) das in Schritt c) erhaltene Produkt gesintert wird.

Die erfindungsgemäß hergestellte Beschichtung liefert auf der Oberfläche von Keramiken selbst in dünnen Schichtdicken eine nahezu geschlossene und damit porenfreie Beschichtung, die durch flüssige Schmelzen aus Titan (Ti), Zirkonium (Zr) oder deren Legierungen praktisch nicht angegriffen wird, so daß sich am Gußteil keine alphacase-Schichten bilden und keine Versprödungserscheinungen auftreten. Die verfahrungsgemäß ausgebildete Oxidschicht zeigt keinerlei Neigung zur Reaktion mit dem flüssigen Titan der Ti-Schmelze. Durch die chemischthermische Zersetzungsreaktion und das nachfolgende Sintern werden auf den Keramiken Beschichtungen mit den gewünschten Eigenschaften erhalten.

In einer Ausführungsform des erfindungsgemäßen Verfahrens liegt die feuerfeste Keramik vorzugsweise bereits in Form der Gußform oder als Tiegelmaterial vor, auf die/das die wäßrige Lösung des thermisch instabilen Metallsalzes aufgebracht wird. Das Aufbringen kann durch einfaches Eintauchen, Bepinseln oder Besprühen der Gußform erfolgen. Aufgrund der Porosität der Keramik durchdringt die wäßrige Lösung die Oberfläche der Keramik.

Als Metalloxide werden erfindungsgemäß Oxide von Sc, La, Y oder deren Gemische eingesetzt, wobei Sc₂O₃, La₂O₃, Y₂O₃ oder deren Gemische bevorzugt sind.

Als Keramiken werden vorzugsweise Oxidkeramiken, Nitridkeramiken und Siliciumcarbidkeramik eingesetzt, auf denen die Oxide von Sc, La, Y oder deren Gemischen thermisch stabile und alpha-case-inerte Beschichtungen bilden. Es haben sich insbesondere solche Oxidkeramiken als geeignet erwiesen, die auf den Komponenten Al₂O₃, SiO₂, MgO, CaO, ZrO₂ und/oder P₂O₅ aufgebaut sind, wie z.B.
Korund, Al₂O₃;
Keramik auf der Basis von Aluminiumsilikaten, z.B. Schamotte, Mullit, Molochite;
Magnesit, MgO;
Zirkoniumdioxid, stabilisiertes ZrO₂
Dolomit, MgOₓ.CaO₁₋ₓ
Chrommagnesite, MgO.Cr₂O₃ und Chromit-Keramiken;
Silika-Keramiken, SiO₂-Basis;
Fosterit-Keramiken, Mg₂SiO₄;
Spinelle, beispielsweise MgO.Al₂O₃;
Titan(IV)-oxid-Keramiken, TiO₂;
Kalkkeramiken, CaO;
Zirkoniumsilikat-Keramiken, ZrSiO₄;
MgO-P₂O₅-SiO₂-Modifikationen; MgO-P₂O₅-Al₂O₃, MgO-P₂O₅-ZrO₂.

Werden Keramiken verwendet, die eine besonders hohe Porosität aufweisen, besteht die Gefahr, daß die Metallsalzlösung zu weit in die Keramik eindringt, so daß das Verfahren mehrmals wiederholt werden muß, um eine ausreichende Schichtdicke zu erhalten. In einem solchen Fall hat es sich als geeignet erwiesen, die Oxide Y₂O₃, La₂O₃ und/oder Sc₂O₃ in feinteiliger Form mit einer Teilchengröße zwischen 5 und 40 µm, vorzugsweise unter 15 µm, in der Metallsalzlösung aufzuschlämmen bzw. zu suspendieren und die erhaltene Suspension auf die Keramikoberfläche aufzubringen. Es wurde festgestellt, daß die Metallsalzlösung in die Keramik eindringt und das Oxid auf der Keramikoberfläche zurückbleibt, wobei aufgrund der Viskosität der Metallsalzlösung eine enge Verbindung zwischen dem Oxid und der Metallsalzlösung besteht. Es bildet sich ein dünner Film, der aus der Metallsalzlösung und dem schwerlöslichen Oxid besteht. Nach Durchführung des thermischen Zersetzungsverfahrens (Verfahrensschritte d) und e)) wird die erfindungsgemäße Beschichtung erhalten. Die Massenanteile an Sc₂O₃, La₂O₃ und/oder Y₂O₃ in der Suspension liegen vorzugsweise zwischen 0,05 und 3 %, bezogen auf die fertige Lösung.

Als thermisch instabile Metallsalze werden vorteilhafterweise die Nitrate, Sulfate, Perchlorate, Sulfamate, Acetate und/oder Formiate von Sc, La und/oder Y eingesetzt, wobei die Nitrate und Gemische aus Nitraten und Formiaten bevorzugt sind. Bei der thermischen Zersetzung bildet sich ein feinteiliges Oxid. Die Zersetzungsreaktin wird im folgenden am Beispiel von Nitrat und Formiat anhand der chemischen Reaktionsgleichungen erläutert, wobei Me für Y, La oder Sc steht:

### Nitrat

2 Me(NO₃)₃ ⇒ Me₂O₃ + 6 NO₂ + 3/2 O₂

### Formiat (unter Einfluß von Luftsauerstoff)

2 Me(HCOO)₃ + 3 O₂ ⇒ Me₂O₃ + 6 CO₂ + 3 H₂O

### Formiat (unter Inertgasatmosphäre)

2 Me(HCOO)₃ ⇒ Me₂O₃ + 3 H₂O + 6 CO

Werden Mischungen aus Nitraten und Formiaten, vorteilhafterweise in einem molaren Mischungsverhältnis Formiat: Nitrat größer als 10 : 4 eingesetzt, bilden sich bei der Zersetzungsreaktion keine Stickstoffoxide:

4 Me(NO₃)₃ + 10 Me(HCOO)₃ ⇒ 7 Me₂O₃ + 15 H₂O + 30 CO₂ + 6 N₂

Zum Entfernen des Lösungswassers im Verfahrensschritt b) kann die mit der Metallsalzlösung beschichtete feuerfeste Keramik zur Beschleunigung des Vorgangs leicht erwärmt werden. Dieser Trocknungsvorgang wird bevorzugt bei Temperaturen von 100 °C bis 150 °C über einen Zeitraum von 5 bis 30 Minuten durchgeführt. Das Metallsalz bleibt auf der Keramikoberfläche zurück.

Im Verfahrensschritt c) wird die feuerfeste Keramik aus Schritt b) auf eine Temperatur oberhalb der Zersetzungstemperatur des Metallsalzes erhitzt. Im Temperaturbereich zwischen 150 °C und 350 °C geben die Salze in der Regel stufenweise ihr Hydratwasser ab, wobei sie eine Hydratwasserschmelze bilden, die sich über die Oberfläche der Keramik und ggf. in den Poren direkt unterhalb der Oberfläche verteilt. Bei Temperaturen oberhalb von etwa 400 °C kann die Zersetzungsreaktion der Salze beobachtet werden. Es bilden sich Oxide. Die Zersetzungsreaktion und Oxidbildung ist in der Regel nach einem Zeitraum von 30 Minuten bis 2 Stunden abgeschlossen. Auf der Oxidkeramik ist eine abriebfeste Beschichtung entstanden.

Im anschließenden Verfahrensschritt d) wird das in c) erhaltene Produkt in an sich bekannter Weise gesintert. Dazu wird das Produkt auf eine Temperatur oberhalb der Sintertemperatur der sich bildenden Oxide erhitzt. Die Verfahrensschritte c) und d) können kontinuierlich, d.h. ohne Abkühlen, erfolgen. In dieser Verfahrensvariante ist die Zersetzungsreaktion und Oxidbildung in der Regel bei Temperaturen zwischen 500°C und 800°C abgeschlossen. Die Sintertemperatur sollte aus anwendungstechnischen Gründen die Erweichungstemperatur der Keramik nicht überschreiten und liegt bevorzugt unter 1250 °C, insbesondere unter 1200 °C. Durch das Sintern tritt eine Verfestigung der erfindungsgemäßen Beschichtung auf der Oxidkeramik ein. Die erhaltene Beschichtung weist in der Regel eine Gesamtdicke von 50-100 µm auf.

Zur Verstärkung dieser Beschichtung kann das voranstehend beschriebene Verfahren wiederholt werden, wobei Schichtdicken bis zu 1 mm erhalten werden können. Die Schichtdicke setzt sich zusammen aus der infiltrierten Schicht plus der anhaftenden freien Schicht.

Ein weiterer Gegenstand der vorliegenden Erfindung ist die Verwendung einer beschichteten Gußform aus feuerfester Keramik zur Herstellung von Gußteilen aus Ti, Zr und deren Legierungen, deren Beschichtung dadurch erhältlich ist, daß
a) eine wäßrige Lösung eines thermisch instabilen Metallsalzes, ausgewählt aus den Salzen von Sc, La, Y oder deren Gemische, auf die feuerfeste Keramik, ausgewählt aus der Gruppe der Oxidkeramiken, Nitridkeramiken und Siliciumcarbidkeramiken aufgebracht wird,
b) das Lösungswasser entfernt wird,
c) das in Schritt b) erhaltene Produkt auf eine Temperatur oberhalb der Zersetzungstemperatur des Metallsalzes erhitzt wird und
d) das in Schritt c) erhalten Produkt gesintert wird.
   Unter Gußform im Sinne dieser Erfindung sind auch Tiegel zu verstehen, die zum Schmelzen von Ti, Zr und deren Legierungen eingesetzt werden können.
   In einer ersten Ausführungsform kann die erfindungsgemäße beschichtete Gußform aus feuerfester Keramik dadurch erhalten werden, daß
e) eine wäßrige Lösung eines thermisch instabilen Metallsalzes, ausgewählt aus den Salzen von Sc, La, Y oder deren Gemische, auf eine Gußform aus feuerfester Keramik, ausgewählt aus der Gruppe der Oxidkeramiken, Nitridkeramiken und Siliciumcarbidkeramiken aufgebracht wird,
f) das Lösungswasser entfernt wird und,
g) das in Schritt f) erhaltene Produkt auf eine Temperatur oberhalb der Zersetzungstemperatur des Metallsalzes erhitzt wird und
h) das in Schritt g) erhaltene Oxid gesintert wird.
   Hinsichtlich der Bedingungen in den Verfahrensschritten f) bis h) sind die gleichen Bedingungen einzuhalten wie sie oben für die Verfahrensschritte b) bis d) beschrieben wurden. In dieser Ausführungsform werden in der Regel Gußformen eingesetzt, die in an sich bekannter Weise aus Gußeinbettmassen erhalten wurden.
   In einer zweiten Ausführungsform kann die erfindungsgemäß beschichtete Gußform dadurch erhalten werden, daß
i) ein in fester Form vorliegendes Oxid aus Sc, La und/oder Y in einer wäßrigen Lösung eines thermisch instabilen Metallsalzes, ausgewählt aus den Salzen von Sc, La, Y oder deren Gemische aufgeschlämmt wird, wobei der Masssenanteil an Sc₂O₃, La₂O₃ und/oder Y₂O₃ vorzugsweise zwischen 0,05 und 3 %, bezogen auf die fertige Lösung, beträgt.
k) die Aufschlämmung auf ein Modell der zu gießenden Form aufgebracht wird,
l) das Lösungswasser entfernt wird,
m) das in l) erhaltene beschichtete Modell mit einer Gußeinbettmasse aus feuerfester Keramik ausgewählt aus der Gruppe der Oxidkeramiken, Nitridkeramiken und Siliciumcarbidkeramiken ummantelt und anschließend getrocknet wird,
n) das in m) erhaltene Produkt auf eine Temperatur oberhalb des Brennpunktes des Materials, aus welchem das Modell besteht, erhitzt wird,
o) weiter auf eine Temperatur oberhalb der Zersetzungstemperatur des Metallsalzes erhitzt wird und
p) das in Schritt o) erhaltene Produkt gesintert wird.

Zur Durchführung der zweiten Ausführungsform werden vorzugsweise die Oxide von Sc, La und/oder Y in feinteiliger Form, in der Regel mit mittleren Korngrößen von 5 bis 40 µm, vorzugsweise unter 15 µm, eingesetzt. Sie werden in einer wäßrigen Lösung eines thermisch instabilen Metallsalzes, ausgewählt aus den Salzen von Sc, La, Y oder deren Gemische aufgeschlämmt bzw. suspendiert, so daß eine vorzugsweise streichfähige Masse erhalten wird. Die Konzentration der Metallsalze in der Lösung beträgt in der Regel 50 bis 800 g/l. Die Aufschlämmung bzw. Suspension wird auf ein Modell, vorzugsweise ein Wachsmodell, aufgetragen, wobei sich ein geschlossener Film bildet, anschließend wird getrocknet. Zur Stabilisierung dieser Primärschicht kann sie noch zusätzlich durch "MgO-Sand" besandet werden. Dies ist ein aus der Gießereitechnik bekanntes Verfahren, um eine verbesserte Verbindung zwischen Primärschicht und Gußeinbettmasse herzustellen. Das Trocknen wird üblicherweise bei einer Temperatur unterhalb der Schmelztemperatur des Materials, aus welchem das Modell besteht, vorzugsweise bei Raumtemperatur, durchgeführt. Es wird der sogenannte Primärüberzug erhalten. Die getrocknete Beschichtung wird anschließend mit einer üblichen Gußeinbettmasse ummantelt. Die Gußeinbettmasse läßt man in an sich bekannter Weise Aushärten und erhält die sog. "grüne" Muffel. Diese wird in einem üblichen Ofen auf eine Temperatur oberhalb des Brennpunktes des Materials, aus welchem das Modell besteht, erhitzt, wobei das Material schmilzt und schließlich abbrennt. Anschließend wird weiter erhitzt, bis eine Temperatur oberhalb der Zersetzungstemperatur des Metallsalzes erreicht ist. Nach Beendigung der Zersetzungsreaktion wird das erhaltene Produkt in an sich bekannter Weise gesintert.

Es werden Gußformen erhalten, die sich hervorragend zum Gießen von Gußobjekten aus Titan, Zirkonium und deren Legierungen eignen, ohne daß die Beschichtung bzw. das Keramikmaterial mit den flüssigen Metallen bzw. Metallegierungen eine Reaktion eingeht.

Die vorliegende Erfindung wird anhand der folgenden Beispiele näher erläutert, ohne diese darauf zu beschränken.

Der zeitliche Ablauf des Verfahrens zur Herstellung einer Beschichtung für Oberflächen von feuerfester Keramik ist für Gußformen und Tiegelmaterial auf der anliegenden Zeichnung dargestellt. Die Grafik gibt den zeitlichen Ablauf der Beschichtung von Keramikoberflächen für Tiegelmaterialien oder Gußformen mit (Y, La, Sc)₂O₃ wieder, hergestellt aus wäßrigen Nitratlösungen, für den Titanfeinguß. Die Bereiche 1. bis 6. haben die folgende Bedeutung:
1: Nitratlösung in die Keramikoberfläche einziehen lassen
2: Bildung einer Hydratwassersalzschmelze, Trockenvorgang
3: Sukzessive Abgabe des Hydratwassers
4: Zersetzungsreaktion der Nitrate zu den Oxiden in feinverteilter Form
5: Beginnende Sinterung der Oxide und Aufbau der Haftung
6: Fortschreitende Sinterung, Verbindungsbildungen

Erfindungsgemäß lassen sich dünne Schichten durch chemische Zersetzungsreaktionen aus homogenen Phasen bei tiefen Temperaturen, beispielsweise etwa 400° C herstellen. Erfindungsgemäß entstehen die Oxide erst durch Reaktion auf der Keramikoberfläche.

### Beispiele

### Beispiel 1

500 g Lanthan(III)-nitrat-Hexahydrat wurden in 1 l destilliertem Wasser gelöst. Die Lösung wurde mit Salpetersäure auf pH = 2 eingestellt, um Hydrolysereaktionen zu unterdrücken. Die erhaltene Lösung wurde in einen Keramiktiegel aus Mullit (feuerfestes Keramiksystem) aus Al₂O₃-SiO₂) gefüllt. Die Lösung wurde von den porösen Tiegelwänden aufgesogen. Nach 5 Min. wurde die Metallsalzlösung ausgegossen, der behandelte Tiegel bei 200 °C 15 Min. getrocknet und dann in einen Kammerofen überführt.

Der Kammerofen wurde innerhalb von 2 h auf 1100 °C aufgeheizt. Im Temperaturbereich zwischen 100 °C und 350 °C gaben die Nitrate stufenweise ihr Hydratwasser ab und bildeten eine Hydratwasserschmelze. Ab etwa 400 °C konnte die Zersetzung des Nitrats unter NO₂-Entwicklung beobachtet werden. Dieser Vorgang war bei etwa 500 °C abgeschlossen. Es wurde eine abriebfeste Beschichtung auf dem Tiegel erhalten. Zur Verfestigung dieser Beschichtung wurde weiter auf 1100 °C aufgeheizt und 1 h bei dieser Temperatur gehalten.

Die erhaltene Beschichtung hatte eine Stärke von ca. 1 mm (infiltrierte Schicht plus freie anhaftende Schicht).

Der erhaltene beschichtete Tiegel wurde mit einem Titanteil (Abschnitt eines Ti-Rundstabteiles) geschickt und in einem Induktionsofen eingesetzt (Ofen für Schleudergußverfahren). Der Ofen wurde durch eine Drehschieberpumpe evakuiert und mit 99,999 %iger Argon geflutet. Der Spülvorgang wurde dreimal wiederholt, um Sauerstoffreste nahezu vollständig zu entfernen. Anschließend wurde der mit Ti gefüllte Tiegel aufgeheizt. Das Titan wurde bei 1670 °C flüssig und verlief im Tiegel. Durch ein Sichtfenster wurde der Schmelzvorgang beobachtet. Es war keine Reaktion erkennbar. Innerhalb eines Verarbeitungszeitraumes von 5 sec. wurde eine Temperatur von 1720 °C (Gießtemperatur für reines Titan) erreicht. Anschließend wurde der Ofen abgeschaltet und nach dem Erkalten wurde der beschichtete Tiegel auf Reaktionen zwischen dem Tiegelmaterial und Titan untersucht. Es hatte sich ein dünner Schlackenfilm (0,1 mm) zwischen dem beschichteten Tiegel und dem Titan gebildet. Der feste Schlackenfilm bestand aus festem La₂O₃, daß geringe Mengen TiO aufgenommen hatte, erkennbar an der Grauverfärbung des La₂O₃. Es hatten sich keine dampfförmigen oder flüssigen Reaktionsprodukte gebildet. Das Titan war blank. Es hielt weder im Innern noch an den Randschichten Poren. Die Oberflächenhärte, die ein Maß für die Sauerstoffaufnahme bildet, hatte sich nicht verändert. Es hatte sich keine alpha-case-Schicht gebildet. Der Tiegel war unbeschädigt und konnte wieder verwendet werden.

### Vergleichsbeispiel 1

Das Beispiel 1 wurde wiederholt, ohne daß der Tiegel beschichtet wurde.

Beim Erreichen der Schmelztemperatur von Titan fand eine eruptive Dampfbildung statt. Ferner konnten heftige Reaktionen zwischen dem flüssigen Titan und dem Tiegelmaterial beobachtet werden.

Nach dem Abkühlen wurden der Tiegel und das Titan untersucht. Der Tiegel war stark angegriffen. Das Titan war im Bereich von mm von zahlreichen Gasblaseneinschlüssen durchsetzt. Es war vollständig versprödet und um den Faktor 2 bis 3 aufgehärtet. Die Bruchdehnung des Titans war nahezu 0. Außerdem hatte sich eine alpha-case-Schicht ausgebildet.

### Beispiel 2

Beispiel 1 wurde wiederholt, mit der Ausnahme, daß anstelle von Lanthan(III)-nitrat-Hexahydrat eine Lösung von Yttrium(III)-nitrat-Hexahydrat mit 400 g Y(NO₃)₃.6H₂O pro l. Die thermische Zersetzung des Metallsalzes trat etwas später, bei 440 °C, ein.

Der beschichtete Tiegel wurde wie in Beispiel 1 mit einem Titanteil gefüllt und auf Gußtemperatur von Titan aufgeheizt.

Wie auch in Beispiel 1 war der Tiegel unversehrt und das Titan blank.

### Beispiel 3

250 g Lanthan(III)-nitrat-Hexahydrat und 150 g Yttrium(III)-nitrat-Hexahydrat werden in 1 l destilliertes Wasser gelöst und wie in Beispiel 1 zur Beschichtung von Korund eingesetzt.

Die Zersetzungsreaktion der beiden Salze fand in dem Temperaturbereich zwischen 400 °C und 500 °C statt.

Die Beschichtung war, wie auch in den Beispielen 1 und 2, gegenüber flüssigem Titan beständig.

### Beispiel 4

Eine Gußform, die aus den Keramikkomponenten Korund (α-Al₂O₃) und Zirkon(IV)-silikat (ZrSiO₄) besteht, wird hergestellt. Das Bindemittel besteht aus Magnesiumoxid (MgO) und Monoammonium-dihydrogenphosphat, das mittels einer Kieselsol-Lösung zur Reaktion gebracht wird. Die Gußform wird durch ein Wachsausschmelzverfahren hergestellt. Diese Gußform wird innerhalb einer Stunde auf 900 °C aufgeheizt. Bei dieser Temperatur wird sie eine Viertelstunde lang gesintert. Danach läßt man die Gußform auf Raumtemperatur abkühlen.

In die gebildete Gußform wird eine Yttrium(III)-nitrat-Lösung eingefüllt (400 g Y(NO₃)₃.6H₂O in einem Liter destilliertem Wasser aufgelöst, pH=4,5). Man läßt die Lösung in die Keramikoberflächen (Innenflächen) rd. 30 sec. lang einziehen, wobei auch der Gußansatzkegel ebenfalls mit der Lösung Kontakt besitzt. Die überschüssige Lösung wird abgegossen oder abgesaugt. Diese so hergestellte Form wird unmittelbar danach bei 200 °C vorgetrocknet und danach innerhalb einer Stunde in einem Ofen auf 900 °C aufgeheizt. Im Temperaturbereich 400 bis 500 °C findet die Zersetzung des Nitrats zum Oxid statt. Es bildet sich ein Oxid aus Y₂O₃ in inniger Verbindung mit der oxidischen Gußformkeramik. Die Keramikoberfläche ist mit Y₂O₃ derart durchsetzt, daß sich auf der Oberfläche eine lückenlose und beständige Y₂O₃-Beschichtung befindet.

Die Stärke der Beschichtung liegt, je nach Herstellungsart zwischen 5 bis 20 µm. Die in diese Gußform vergossenen Titanteile weisen keine alpha-case-Oberflächenfehler durch das Vergießen auf. Das Metallteil ist mit der Gußform nicht verklebt und läßt sich leicht ausbetten, da Verschlackungsreaktion minimal sind.

### Beispiel 5

Es wurde eine Yttrium(III)-nitrat-hexahydrat-Lösung mit 1400 g in einem Liter Lösung hergestellt, was einer durch chemische Zersetzung abscheidbaren Menge von 41 g Y₂O₃ aus 100 ml Lösung entsprach. In 100 ml dieser Lösung wurden 1 g Y₂O₃ suspendiert. Die erhaltene Suspension ließ man bei Raumtemperatur in eine fertige Keramikgußform aus MgO-P₂O₅-Al₂O₃ mit einem Volumen von ca. 4 ml für ein Dentalgußstück aus Ti der Masse 20 g unter Anwendung eines Vibrationsgerätes einsickern. Die Lösung zog schnell (innerhalb von 30 sek.) in den porösen Keramikkörper ein. Nach dem thermischen Zersetzungsverfahren wie in den Beispielen 1 bis 4 hatte sich eine lückenlose, stabile Oxidschicht in den Gußräumen gebildet. Die Schichtdicke betrug etwa 10 µm.

In die vorgeglühte 900°C-heiße Gußform wurde im Schleudergußverfahren (Induktionsofen) unter Reinstargonatmosphäre flüssiges Titan (ca. 1750°C) in dünnwandige Gußteil mit einer Wandstärke bis 1 mm vergossen. An den fertigen Gußteilen wurde keine alpha-case-Bildung nachgewiesen. Die Gußteile besaßen Bruchdehnungen von über 15 %. Die Härte über dem Gußquerschnitt war nahezu konstant und lag zwischen 200 bis 250 HV10. Die Gußteile konnten um mehr als 90° gebogen werden, ohne daß Oberflächenrisse nachgewiesen werden konnten. Die Gußteile waren metallisch blank oder zeigten nur schwache gelb-blaue Anlauffarben.

### Beispiel 6

Es wurde eine Yttrium(III)-formiat-Lösung hergestellt, indem 30 g Y₂O₃ (Reinheit 99%) oder eine äquimolare Menge Yttrium(III)-carbonat (47,5 g in Wasser unter Zugabe von konzentrierter Ameisensäure und unter leichtem Erwärmen (bis 60°C) aufgelöst wurde. Es wurden 100 ml Lösung erhalten. Der pH-Wert der Yttrium(II)-formiatlösung lag zwischen 3 und 4).

In die noch warme Lösung (ca. 40°C) wurden 1 g reines Yttrium(III)-oxid suspendiert. Das Beschichtungsverfahren wurde wie in Beispiel 4 beschrieben durchgeführt. Es wurden die gleichen Ergebnisse wie in Beispiel 4 erhalten.

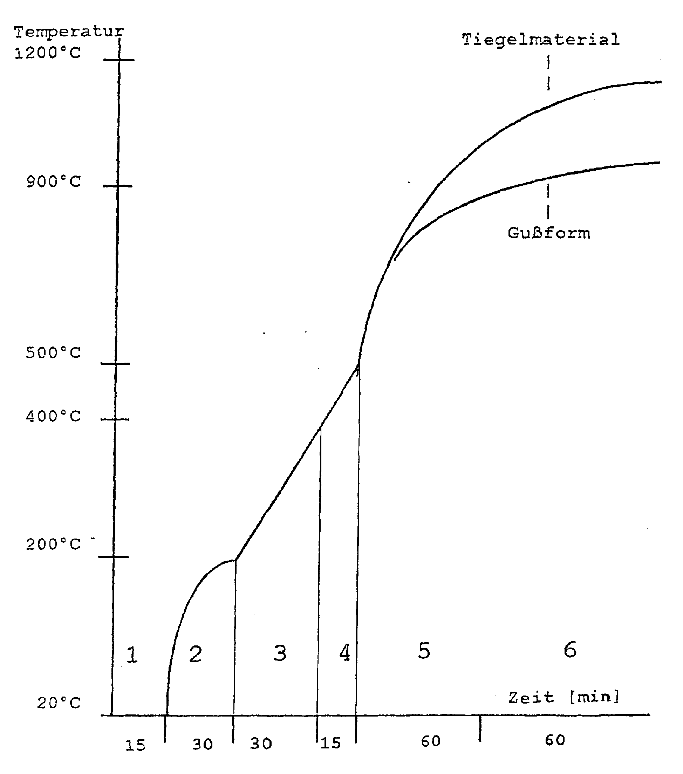

## Patentansprüche

1. Verfahren zur Herstellung einer Beschichtung für Oberflächen von feuerfesten Keramiken, **dadurch gekennzeichnet, daß**
a) eine wäßrige Lösung eines thermisch instabilen Metallsalzes, ausgewählt aus den Salzen von Sc, La, Y oder deren Gemische, auf eine feuerfeste Keramik, ausgewählt aus der Gruppe der Oxidkeramiken, Nitridkeramiken und Siliciumcarbidkeramiken aufgebracht wird,
b) das Lösungswasser entfernt wird,
c) das in Schritt b) erhaltene Produkt auf eine Temperatur oberhalb der Zersetzungstemperatur des Metallsalzes erhitzt wird und
d) das in Schritt c) erhaltene Produkt gesintert wird.

2. Verfahren nach Anspruch 1, **dadurch gekennzeichnet, daß** das Metallsalz ausgewählt ist aus den Nitraten, Sulfaten, Perchloraten, Sulfamaten, Formiaten und/oder Acetaten von Sc, La und/oder Y.

3. Verfahren nach einem der Ansprüche 1 oder 2, **dadurch gekennzeichnet, daß** die Oxidkeramik ausgewählt ist aus Korund, Aluminiumsilikaten wie Schamotten, Mulliten, Molochiten, Magnesit, Zirkoniumdioxid, Dolomit, Chrommagnesiten, Silikat-Keramiken, Fosteriten, Spinellen, Titan-(IV)-oxid-Keramiken, Kalkkeramiken, Zirkoniumsilikat-Keramiken und deren Gemischen.

4. Verfahren nach einem der Ansprüche 1 bis 3, **dadurch gekennzeichnet, daß** in Schritt a) feinteiliges Oxid von Sc, La und/oder Y in der Metallsalzlösung aufgeschlämmt bzw. suspendiert wird und die erhaltene Aufschlämmung bzw. Suspension auf die feuerfeste Keramik aufgebracht wird, wobei das feinteilige Oxid von Sc, La und/oder Y vorzugsweise in einer Menge von 0,05 bis 3 %, bezogen auf die fertige Lösung, vorliegt.

5. Verfahren nach einem der Ansprüche 1 bis 4, **dadurch gekennzeichnet, daß** das Lösungswasser entfernt wird, indem die in Schritt a) erhaltene Keramik auf eine Temperatur zwischen 80 °C und unterhalb der Zersetzungstemperatur des Metallsalzes erwärmt wird.

6. Verfahren nach einem der Ansprüche 1 bis 5, **dadurch gekennzeichnet, daß** das Sintern bei einer Temperatur bis 1250°C, insbesondere bis 1200°C durchgeführt wird.

7. Verfahren nach einem der Ansprüche 1 bis 6, **dadurch gekennzeichnet, daß** die feuerfeste Keramik eine Gußform ist.

8. Verfahren nach Anspruch 7, **dadurch gekennzeichnet, daß**
e) die Aufschlämmung nach Schritt a) auf ein Modell der zu gießenden Form aufgebracht wird,
f) das in Schritt c) erhaltene beschichtete Modell mit einer Gußeinbettmasse aus feuerfester Keramik ausgewählt aus der Gruppe der Oxidkeramiken, Nitridkeramiken und Siliciumcarbidkeramiken ummantelt und anschließend getrocknet wird,
g) das in Schritt f) erhaltene Produkt auf eine Temperatur oberhalb der Verbrennungstemperatur des Materials, aus welchem das Modell besteht, erhitzt wird,
h) weiter die Schritte c) und d) durchgeführt werden.

9. Verwendung einer beschichteten Gußform nach einem der vorhergehenden Ansprüche zur Herstellung von Gußteilen aus Ti, Zr und deren Legierungen.

## Claims

1. A process for producing a coating for the surfaces of foundry ceramics, **characterised in that**:
a) an aqueous solution of a thermally unstable metal salt selected from the salts of Sc, La, Y, or mixtures thereof, is applied onto a refractory ceramic selected from the group of oxide ceramics, nitride ceramics, and silicon-carbide ceramics,
b) the solution water is removed,
c) the product obtained in step b) is heated to a temperature above the decomposition temperature of the metal salt, and
d) the product obtained in step c) is sintered.

2. A process according to claim 1, **characterised in that** the metal salt is selected from the nitrates, sulphates, perchlorates, sulphamates, formates, and/or acetates of Sc, La, and/or Y.

3. A process according to one of claims 1 or 2, **characterised in that** the oxide ceramic is selected from corundum, aluminum silicates such as chamottes, molochites, magnesite, zirconium dioxide, dolomite, chrome magnesites, silicate ceramics, fosterites, spinels, titanium(IV)-oxide ceramics, lime ceramics, zirconium-silicate ceramics, and mixtures thereof.

4. A process according to one of claims 1 to 3, **characterised in that** in step a), a fine-particle oxide of Sc, La, and/or Y is slurried or suspended in the metal-salt solution, and the obtained slurry or suspension is applied onto the refractory ceramic, where the fine-particle oxide of Sc, La, and/or Y is present preferably in a quantity of 0.5 to 3 % with respect to the finished solution.

5. A process according to one of claims 1 to 4, **characterised in that** the solution water is removed by heating the ceramic obtained in step a) to a temperature between 80°C and the decomposition temperature of the metal salt.

6. A process according to one of claims 1 to 5, **characterised in that** the sintering is performed at a temperature up to 1250°C, especially up to 1200°C.

7. A process according to one of claims 1 to 6, **characterised in that** the refractory ceramic is a casting mould.

8. A process according to claim 7, **characterised in that**
e) the slurry according to step a) is applied onto a model of the form to be poured,
f) the coated model obtained in step c) is encased with a casting embedding of a refractory ceramic selected from the group of oxide ceramics, nitride ceramics, and silicon-carbide ceramics, and subsequently dried,
g) the product obtained in step f) is heated to a temperature above the flash point of the material of which the model is composed,
h) further, steps c) and d) are performed.

9. Use of a coated casting mould according to one of the preceding claims to produce castings of Ti, Zr, and their alloys.

## Revendications

1. Procédé pour la fabrication d'un revêtement pour les surfaces en céramique réfractaire, **caractérisé en ce que**
a) une solution aqueuse d'un sel métallique thermiquement instable, choisi parmi les sels de Sc, La, Y ou leurs mélanges, est appliqué sur une céramique réfractaire choisie dans le groupe des céramiques oxydées, céramiques nitrurées et céramiques au carbure de silicium,
b) l'eau de la solution est éliminée,
c) le produit obtenu dans l'étape b) est chauffé à une température supérieure à la température de décomposition du sel métallique, et
d) le produit obtenu dans l'étape c) est fritté.

2. Procédé selon la revendication 1, **caractérisé en ce que** le sel métallique est choisi parmi les nitrates, sulfates, perchlorates, sulfamates, formiates et/ou acétates de Sc, La et/ou Y.

3. Procédé selon l'une des revendications 1 ou 2, **caractérisé en ce que** la céramique oxydée est choisie parmi le corindon, les silicates d'aluminium tels que les chamottes, les mullites, les molochites, la magnésite, le dioxyde de zirconium, la dolomite, les chromomagnésites, les céramiques silicatées, les fostérites, les spinelles, les céramiques à l'oxyde de titane (IV), les céramiques calciques, les céramiques au silicate de zirconium et leurs mélanges.

4. Procédé selon l'une des revendications 1 à 3, **caractérisé en ce que** dans l'étape a), de l'oxyde de Sc, La et/ou Y en particules fines est mis en barbotine ou en suspension dans la solution de sel métallique et la barbotine ou suspension obtenue est appliquée sur la céramique réfractaire, l'oxyde de Sc, La et/ou Y en particules fines étant de préférence présent à raison de 0,05 à 3 % par rapport à la solution finie.

5. Procédé selon l'une des revendications 1 à 4, **caractérisé en ce que** l'eau de la solution est éliminée en chauffant la céramique obtenue dans l'étape a) à une température comprise entre 80°C et en dessous de la température de décomposition du sel métallique.

6. Procédé selon l'une des revendications 1 à 5, **caractérisé en ce que** le frittage est effectué à une température jusqu'à 1250°C, en particulier jusqu'à 1200°C.

7. Procédé selon l'une des revendications 1 à 6, **caractérisé en ce que** la céramique réfractaire est un moule de coulée.

8. Procédé selon la revendication 7, **caractérisé en ce que**
e) la barbotine selon l'étape a) est appliquée sur un modèle du moule à couler,
f) le modèle enduit obtenu dans l'étape e) est enveloppé d'une masse d'enrobage pour coulée en céramique réfractaire choisie dans le groupe des céramiques oxydées, céramiques nitrurées et céramiques au carbure de silicium, puis séché,
g) le produit obtenu dans l'étape f) est chauffé à une température supérieure à la température de combustion du matériau dont est fait le modèle,
h) les étapes c) et d) sont en outre exécutées.

9. Utilisation d'un moule de coulée enduit selon l'une des revendications précédentes pour la fabrication de pièces coulées en Ti, Zr et leurs alliages.
